Europäisches Patentamt

European Patent Office

Office européen des brevets

(11) Veröffentlichungsnummer: **0 408 161 A2**

# EUROPÄISCHE PATENTANMELDUNG

(21) Anmeldenummer: 90250176.6

(22) Anmeldetag: **12.07.90**

(51) Int. Cl.5: **B29C 43/10**, //B29L23:00

(30) Priorität: **12.07.89 DE 3923416**

(43) Veröffentlichungstag der Anmeldung:
**16.01.91 Patentblatt 91/03**

(84) Benannte Vertragsstaaten:
**AT BE CH DE DK ES FR GB GR IT LI LU NL SE**

(71) Anmelder: **MECRON MEDIZINISCHE PRODUKTE GMBH**
**Nunsdorfer Ring 23-29**
**D-1000 Berlin 48(DE)**

(72) Erfinder: **Kranz, Curt, Dr.-Ing.**
**Kufsteiner Strasse 12**
**D-1000 Berlin 62(DE)**
Erfinder: **Fischer, Hans-Joachim, Dr.-Ing.**
**Trippsteinstrasse 21**
**D-1000 Berlin 46(DE)**
Erfinder: **Holstein, Wolfgang, Dr.-Ing.**
**Ansbacher Strasse 72**
**D-1000 Berlin 30(DE)**
Erfinder: **Nick, Hans-Jürgen, Dipl.-Ing.**
**Rotdornstrasse 3**
**D-1000 Berlin 41(DE)**

(74) Vertreter: **Christiansen, Henning, Dipl.-Ing.**
**Patentanwalt Pacelliallee 43/45**
**D-1000 Berlin 33(DE)**

(54) Verfahren zur Herstellung eines Hohlkörpers.

(57) Verfahren zum Herstellen eines Hohlkörpers aus insbesondere faserverstärktem thermoplastischem Kunststofflaminat, bei dem das Kunststofflaminat auf einen Hohlkern aufgebracht wird, bei dem der Hohlkern mit dem diesen umschließenden Kunststofflaminat in eine Hohlform eingelegt wird, bei dem der Hohlkern zum Anpressen des erwärmten Kunststofflaminates an die Innenwand der Hohlform mittels Innendruck zu dem Hohlkörper aufgeweitet wird und bei dem der Hohlkern nach dem Abkühlen aus dem Hohlkörper herausgelöst wird. Dabei wird der ein leicht verdampfbares Medium enthaltende und hermetisch verschlossene Hohlkern (11) erwärmt, so daß das Aufweiten des Hohlkerns (11) durch Verdampfen des eingeschlossenen Mediums erfolgt.

Fig.1

EP 0 408 161 A2

## VERFAHREN ZUR HERSTELLUNG EINES HOHLKÖRPERS

Die Erfindung betrifft ein Verfahren der im Oberbegriff des Anspruchs 1 angegebenen Art sowie ein nach dem Verfahren hergestelltes Produkt zur Anwendung in der Osteosynthese.

Bei einem bekannten derartigen Verfahren zur Herstellung eines ein Hohlprofil enthaltenden Körpers wird zunächst ein elastischer Schlauch über einen hohlzylindrischen Kern gezogen. An diesem wird anliegend ein folienartiges, den Kern umschließendes Kunststofflaminat aufgebracht. Diese sandwichchartige Anordnung wird in eine, die Anordnung umgebende, Hohlform gelegt. Nach dem Verschließen der Hohlform wird der Schlauch bei erhöhter Temperatur mit Druckluft gefüllt, so daß dieser nach außen gegen das Kunststofflaminat und dieses gegen die Hohlforminnenwandung preßt. Anschließend wird das Kunststofflaminat abgekühlt, entformt und die sich im Schlauch befindliche Druckluft abgelassen.

Dieses Verfahren hat den Nachteil, daß nur Teile mit geringen Festigkeitseigenschaften hergestellt werden können, da die thermoplastischen, faserverstärkten Kunststoffe für das festigkeitssteigernde Auskristallisieren derselben eine höhere Temperatur benötigen. Ein aus elastomeren Kunststoff bestehender Schlauch widersteht schadensfrei aber nur einer maximalen Temperatur von ca. 200°C. Das Verfahren ist darüberhinaus aufgrund der komplizierten Ventil-, Pump- und Leitungsvorrichtungen sehr aufwendig und gegen Störungen anfällig.

Ein weiteres derartiges Verfahren zum Herstellen eines gewellten Kunststoffrohrs ist aus der US-PS 38 33 699 bekannt. Das Kunststofflaminat wird dabei auf einen Hohlkern aufgebracht, wobei das Kunststofflaminat den Hohlkern dann nahezu vollständig umgibt. Anschließend wird der Hohlkern mit dem ihn umschließenden Kunststofflaminat in eine Hohl form eingelegt. Aus Öffnungen des Hohlkerns strömt dann Gas zwischen den Hohlkern und das Kunststofflaminat. Aufgrund des steigenden Innendrucks durch das einströmende Gas wird das erwärmte Kunststofflaminat an die Innenwand der Hohlform gepreßt und auf diese Weise zum Hohlkörper aufgeweitet. Das Aushärten des Kunststofflaminats erfolgt unter erhöhter Temperatur in einem getrennten Verfahrensschritt. Nach dem Abkühlen wird der Hohlkern aus dem Hohlkörper herausgelöst.

Dieses Verfahren hat zum einen den Nachteil, daß das Formpressen und das Aushärten in getrennten, voneinander unabhängigen Verfahrensschritten ablaufen. Dies ist sehr zeitaufwendig und kostenintensiv, wobei für die beiden Verfahrensschritte jeweils aufwendige und komplizierte Vorrichtungen notwendig sind.

Desweitern ist eine vom Hohlkern getrennte Druckquelle erforderlich, die das Aufweiten des Kunststofflaminats durch Erzeugen eines Gasinnendrucks ermöglicht. Dies ist sehr aufwendig, zumal der Gasdruck durch das Aufweiten des Kunststofflaminats und dem sich daraus ergebenden sich vergrößernden Volumen ständig nachgeregelt werden muß. Ein gleichmäßig hoher Druck während des Umformprozesses und somit eine gleichbleibende Rohrqualität sind hierbei kaum zu realisieren.

Zum anderen ist dieses Verfahren nicht zur Herstellung von hochfesten Kunststoffhohlkörpern geeignet, da diese unter hohem Druck und sehr hoher Temperatur aushärten müssen. Der Einsatzbereich des Verfahrens ist wegen der Trennung von Temperatur- und Druckbehandlung bei der Herstellung von Hohlkörpern lediglich auf Kunststoffhohlkörper mit geringen Festigkeitswerten beschränkt.

Dabei sind bei dem bekannten Verfahren während des Aushärtvorgangs keine hohen Aushärttemperarturen möglich, da die faltenbildenden Flächen des Kunststoffmantels beim Aushärten aneinandergedrückt aufeinander liegen und somit Gefahr laufen, bei höherer Temperatur und/oder Druck miteinander zu verkleben bzw. zu verschmelzen.

Mit steigender Temperatur nimmt auch der den Kunststoffmantel schädigende Einfluß des umgebenden Mediums zu, insbesondere durch Oxidationsvorgänge des Kunststofflaminats mit dem Gas, das zum Erzeugen des Innendrucks notwendig ist.

Der Erfindung liegt die Aufgabe zugrunde, das Verfahren der eingangs genannten Gattung zu vereinfachen und seine Anwendbarkeit, insbesondere bei höheren Temperaturen, zu vergrößern.

Diese Aufgabe wird mit den kennzeichnenden Merkmalen des Anspruchs 1 gelöst.

Der Erfindung liegt die Erkenntnis zugrunde, daß sich der Hohlkern, um den der Kunstoff herum aufgebracht wird, und die Komponente, die den Preßvorgang bewirkt, bei dem Verfahren in einer entsprechenden Vorrichtung zusammenfassen lassen. Weiterhin sind die Prozeßparameter, wie die vorbestimmte Menge eines leicht verdampfbaren Mediums, der Werkstoff des Hohlkerns und seine Eigenschaften sowie die Prozeßtemperatur, in weiten Grenzen aufeinander abstimmbar, so daß für das Kunststofflaminat optimale Umformverhältnisse eingestellt werden können. Durch das erfindungsgemäße Verfahren lassen sich die zur Verfestigung eines Kunststofflaminats mit einer thermoplastischen Matrix beim Umformprozeß wesentlichen Verfahrensparameter Druck und Temperatur nach den gestellten Anforderungen in weiten Grenzen verändern.

Besonders vorteilhaft ist dabei, daß die für den Umformprozeß notwendige Erwärmung den Preßvorgang infolge des sich durch die Erwärmung im geschlossenen, dehnbaren Hohlkern bildenden Dampfdrucks einleitet und somit aufwendige Pumpen- und Drucksystemvorrichtungen einspart. Somit ist lediglich ein einziger Prozeßparameter, die Temperatur, nach einer vorgegebenen zeitabhängigen Funktion zu regeln. Dies ist auch deshalb günstig, weil der Temperaturbereich bestimmter Kunststoffe für ein optimiertes Umformen sehr klein ist.

Durch die Verwendung eines mit einem leicht verdampfbaren, mit einer vorbestimmten Menge Medium gefüllten, hermetisch verschlossenen Hohlkerns können höhere Prozeßtemperaturen ermöglicht werden, da der Hohlkern aufgrund seiner Werkstoffeigenschaften bei diesen Temperaturen das Verfahren nicht nachteilig beeinträchtigt. Auf diese Weise erhalten die Verfahrensprodukte eine erhöhte Festigkeit und Lebensdauer.

Der Hohlkern wird mit thermoplastischen Kunststofflaminat umgeben, so daß dieses an dem Hohlkern anliegt. Dieser wird mit dem so gebildeten Kunststofflaminatmantel in eine Hohlform eingefügt. Eine Heizvorrichtung erwärmt die Hohlform, das Kunststofflaminat und insbesondere den Hohlkern. Dabei erhöht sich durch Verdampfen des im Inneren des Hohlkerns befindlichen Mediums der Druck auf dessen Innenwandungen. Gleichzeitig wird infolge der erhöhten Temperatur gegebenenfalls seine Formsteifigkeit, je nach Hohlkernwerkstoff, verringert. Unter Ausdehnung des Hohlkerns wird das ebenfalls erwärmte thermoplastische Kunststofflaminat gegen die äußere Hohlform gepreßt und somit zum Hohlkörper aufgeweitet. In vorteilhafter Weise läßt sich dadurch ein gleichmäßiger Anpreßdruck erzeugen, der eine homogene Wandungsdicke des Hohlkörpers gewährleistet. Durch die ermöglichten höheren Prozeßtemperaturen weisen die aus thermoplastischen Kunststofflaminat bestehenden und mit diesem Verfahren hergestellten Hohlprofile eine hohe Festigkeit und Lebensdauer auf. Dabei ist das Verfahren einfach und ohne größeren Aufwand durchzuführen.

Nach dem Abkühlen des Hohlkerns und des thermoplastischen Kunststofflaminats, wird der Laminatmantel mit Hohlkern entformt und der Hohlkern aus dem Hohlprofilbereich herausgelöst.

Insbesondere sind folgende vorteilhafte Weiterbildungen günstig:

Den Hohlkern aus metallischem Werkstoff zu fertigen, vorzugsweise Aluminium, und beim erfindungsgemäßen Verfahren bei der Erwärmung bis in den plastischen Bereich zu verformen, bietet sich in besonderer Weise an, da die durch den Dampfdruck gebildete Spannung den aus diesem Werkstoff bestehenden Hohlkern kontinuierlich ausdehnt und so das thermoplastische Kunststofflaminat zusammenpreßt. Die plastische Verformung hält den Anpreßdruck auch nach dem Erkalten aufrecht, so daß ungünstige Schrumpfvorgänge der Hohlform, des Hohlkerns und der Kunststofflaminate verhindert werden. Weiterhin ist es günstig duktilen Werkstoff, wie Aluminium, zu verwenden, da dieser gut plastisch verformbar ist. Desweiteren erweisen sich gute Wärmeleiteigenschaften des Hohlkernwerkstoffs als von Vorteil, um somit das Kunststofflaminat mittelbar über den Hohlkern erwärmen zu können.

Vor dem Einlegen des mit thermoplastischen Kunststofflaminat umgebenen Hohlkerns wird die Hohlform mit Stickstoff gespült und auf diese Weise von, insbesondere das Verfahren beeinträchtigenden, Oxidverbindungen gesäubert.

Das thermoplastische Kunststofflaminat kann in vielfältiger und bequemer Weise, mit für die Beanspruchung jeweils am günstigsten ausgerichteten Fasern um den Hohlkern aufgebracht werden. Vorteilhaft wird das Kunststofflaminat in Form eines Bandes bzw. einer Folie um den Hohlkern gewikkelt und/oder in Form eines Schlauches über den Hohlkern gezogen. Anstelle des thermoplastischen Kunststofflaminats kann aber auch Verbundwerkstoff, gegebenenfalls mit Faseranteil, ein- oder mehrschichtig bzw. als Laminat mantelartig um den Hohlkern aufgebracht werden. In vorteilhafter Weise kann dadurch das Fasermaterial als eigene Schicht und die innere und äußere Mantelfläche des Hohlprofils mit unterschiedlichen Werkstoffen ausgebildet wer den. Dadurch wird eine beanspruchungsgerechte Werkstoffwahl ermöglicht.

Das Erwärmen der Hohlform, des Hohlkerns und somit des Kunststofflaminats erfolgt in einer evakuierten Umgebung, vorzugsweise in einer evakuierten Heizvorrichtung. Eine Oxidation des Kunststoffs und somit eine Beeinträchtigung der Festigkeits- und Lebensdauereigenschaften wird dadurch verhindert.

Infolge des durch Erwärmung erhöhten Innendrucks und die durch die Erwärmung gegebenenfalls bedingte geringere Formfestigkeit dehnt sich der Hohlkern aus, so daß die anliegenden thermoplastischen Kunststoffschichten zusammengepreßt werden. Dabei sind nach dem Erkalten eventuelle Hohlräume im thermoplastischen Kunststofflaminat beseitigt. Die Beseitigung der Hohlräume erhöht, aufgrund der verminderten inneren Kerbwirkung und höheren Materialdichte, zusätzlich die Beanspruchungsmöglichkeiten des Hohlprofils. Das Abkühlen der Hohlform, des Hohlkerns und insbesondere des thermoplastischen Kunststofflaminats wird nach einer vorgegebenen zeitabhängigen Funktion geregelt, um die Werkstoffeigenschaften des Hohlprofils zu optimieren.

Der Hohlkern wird unter Aufbringung von längsgerichteten, den Hohlkern verjüngenden Zugkräften an den Hohlkernenden, entsprechend einer Zugmaschine, aus dem Hohlprofil vorteilhaft herausgelöst. Für vorzugsweise Zug-Druck-Beanspruchung werden thermoplastische Kunststofflaminate mit im wesentlichen beanspruchungsgerechten, längsgerichteten Langfasern verwendet. Desweiteren kann ein Hohlkern und eine Hohlform miteinander zugeordneten Profilen als von Vorteil sein, wenn der Hohlkörper vorbestimmte rotationssymetrische Konturen erhalten soll.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine perspektivische Darstellung von Vorrichtungen als Teile eines Verfahrensschrittes,

Figur 2 eine perspektivische Darstellung einer Vorrichtung als Teil eines weiteren Verfahrensschrittes,

Figuren 3a bis 3c eine perspektivische Darstellung einer Verfahrensvariante,

Figur 4 eine perspektivische Darstellung einer Verfahrensvariante sowie

Figur 5 eine perspektivische Darstellung einer weiteren Verfahrensvariante.

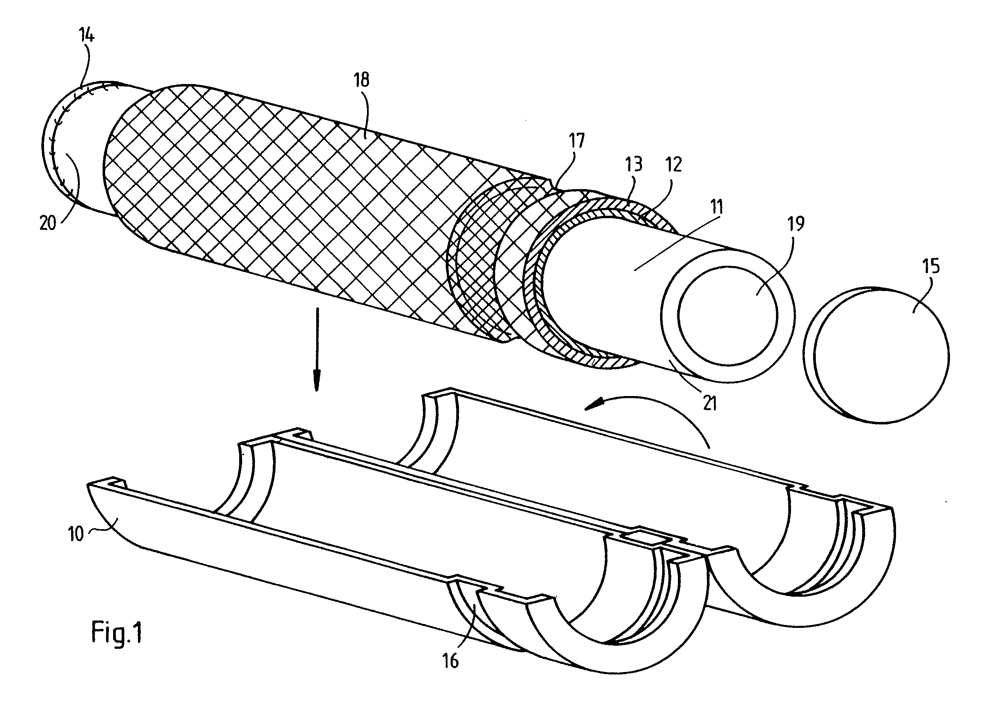

In Figur 1 ist eine rotationssymmetrische Hohlform 10, ein ebenfalls rotationssymmetrischer Hohlkern 11, zwei den Hohlkern 11 schichtweise umgebende, thermoplastische Kunststofflaminate 12 und 13 und zwei Hohlkernseitenteile 14 und 15 dargestellt. Das Hohlkernseitenteil 14 ist mit dem Hohlkern 11 hermetisch verschweißt. Die Hohlform 10 und der Hohlkern 11 weisen in einem Bereich 16 bzw. 17 einen kleineren Querschnitt auf. Die um den Hohlkern 11 angeordneten Kunststofflaminatschichten 12 und 13 sind der Querschnittsänderung im Bereich 17 aufgrund ihrer Oberflächenspannung angepaßt. Durch die Kunststofflaminate 12 und 13 wird im wesentlichen der zu fertigende Hohlkörper 18 gebildet. Der Hohlkern 11 besteht aus Aluminium, da die im weiteren Verfahrensablauf durch Dampfdruck gebildete Spannung den aus diesem Werkstoff bestehenden Hohlkern 11 kontinuierlich ausdehnt und so die thermoplastischen Kunststofflaminate 12 und 13 zusammenpreßt. Ebenso weist der Werkstoff gute Wärmeleiteigenschaften auf, so daß die Kunststofflaminate 12 und 13 über den Hohlkern 11 mittelbar erhitzt werden. Die Außenfläche des Hohlkerns 11, sie wird wie gesagt in dieser Figur von den Kunststofflaminaten 12 und 13 umgeben, ist als Innenform- bzw. Innenpreßfläche für den Hohlkörper 18 ausgebildet.

Die Darstellung zeigt einen Verfahrenschritt zur Erzeugung des Hohlkörpers 18, bei dem der Hohlkern 11 mit den Kunststofflaminaten 12 und 13 in die Hohlform 10 eingefügt wird. Erfindungsgemäß wird zunächst aber eine vorbestimmte Menge eines leicht verdampfbaren, hier nicht dargestellten, Mediums durch eine Seitenöffnung 19, die dem Hohlkernseitenteil 15 zugeordnet ist, in den Hohlkern 10 hineingegeben. Das Hohlkernseitenteil 15 wird anschließend in die Seitenöffnung 19 eingefügt und mit dem Hohlkern 11 hermetisch verschweißt. Das Medium kann nun nicht aus dem Inneren heraustreten und verdampft bei Erwärmung unter Bildung von Dampfdruck im Hohlkern 11. Dieser wird mit den thermoplastischen Kunststofflaminaten 12 und 13 zwei schichtig umgeben. Dabei wird das Kunststofflaminat 12, das folienartig ausgebildet ist, mit im wesentlichen längsgerichteten Fasern einfach um den Hohlkern 11 gewickelt und darüber dann das Kunststofflaminat 13, das schlauchförmig ausgebildet ist, gezogen. Dadurch werden beanspruchungsgerecht, eng anliegend und einfach im Verfahren die Fasern um den Hohlkern 11 aufgebracht. Die im wesentlichen längsgerichteten Langfasern des folienartigen Kunststofflaminats 12 sind für Zug - Druck - Beanspruchung und die im wesentlichen in einem Winkel zueinander angeordneten Fasern des schlauchförmigen Kunststofflaminats 13 sind für Torsionsbeanspruchung besonders geeignet. Vor dem Einlegen des mit den Kunststofflaminaten 12 und 13 umgebenen Hohlkerns 11, wird die Hohlform 10 mit Stickstoff gespült, um diese zu säubern. Der Hohlkern 11 mit dem so gebildeten Kunststofflaminatmantel wird dann in die Hohlform 10 eingefügt und mit, hier nicht dargestellten, Schraubzwingen verschlossen, wie dies in der Figur 1 anhand der Bewegungspfeile jeweils dargestellt ist.

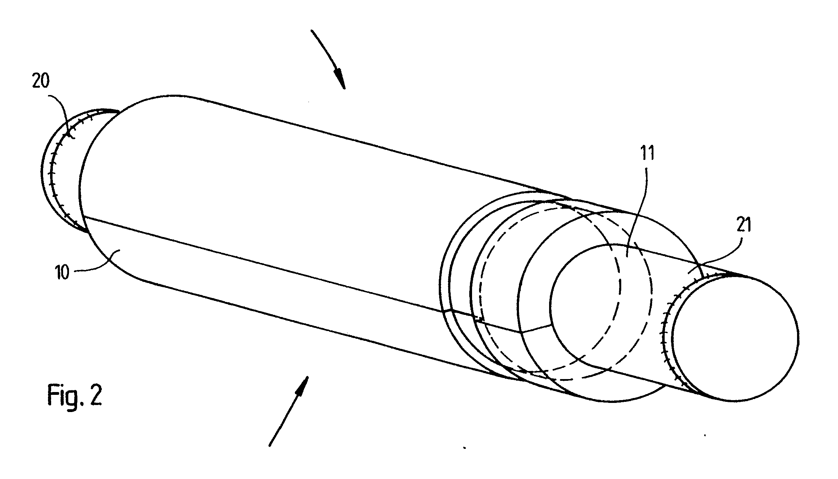

In Figur 2 ist die Hohlform 10, in die der Hohlkern 11 mit den den Hohlkern 11 umgebenden Kunststofflaminaten 12 und 13 eingefügt ist, im geschlossen Zustand dargestellt. Die Enden 20 und 21 des Hohlkerns 11 ragen aus der Hohlform 10 heraus.

Der Hohlkern 11 wird in eine evakuierbare Heizvorrichtung gelegt. Diese wird luftdicht verschlossen. Dann wird mittels einer Vakuumpumpe der Heizraum evakuiert. Die Heizvorrichtung erzeugt anschließend eine im wesentlichen auf die Hohlform 10 gerichtete Wärmestrahlung, so daß sich die Hohlform 10, Hohlkern 11 und die den Hohlkern 11 umgebenden Kunststofflaminate 12 und 13 erwärmen. Dabei wird durch die evakuierte Umgebung eine Oxidation der Kunststofflaminate 12 und 13 verhindert. Die Wärmestrahlung ist symbolisch durch entsprechende Pfeile dargestellt.

Durch Verdampfen des im Inneren des Hohlkerns 11 befindlichen Mediums erhöht sich der Druck auf dessen Innenwandungen und infolge der erhöhten Temperatur wird, jenachdem in welchem Temperaturbereich der Umformprozeß abläuft, seine Formsteifigkeit verringert. Unter Ausdehnung des Hohlkerns 11 bis in den plastischen Bereich werden die ebenfalls erwärmten thermoplastischen, in Figur 1 dargestellten, Kunststofflaminate 12 und 13 gegen die äußere Hohlform 10 gepreßt, so daß eventuell vorher vorhandene Hohlräume beseitigt werden. Dabei erhöhen sich durch die Verdichtung der Kunststofflaminate 12 und 13 die Beanspruchungsmöglichkeiten des Hohlkörpers 18, aufgrund der verminderten inneren Kerbwirkung und höheren Materialdichte.

Bei dem erfindungsgemäßen Verfahren erweist es sich als besonders günstig, daß hohe Prozeßtemperaturen ermöglicht werden und auf diese Weise das Verfahrensprodukt, der Hohlkörper 18, eine hohe Festigkeit und Lebensdauer erhält. Weiterhin läßt sich gleichzeitig ein gleichmäßiger Anpreßdruck erzeugen, der eine homogene Wandungsdicke des Hohlkörpers 18 gewährleistet. Durch ein infolge der höheren Prozeßtemperaturen günstiges Auskristallisieren der thermoplastischen Kunststofflaminate 12 und 13 bekommmt der Hohlkörper 18 hohe Festigkeitseigenschaften und eine längere Lebensdauer. Nach dem Abkühlen der Hohlform 10, des Hohlkerns 11 und der Kunststofflaminate 12 und 13, das nach einer vorgegebenen Zeitfunktion zur Optimierung der Werkstoffeigenschaften geregelt wurde, wird der Laminatmantel mit Hohlkern 11 entformt und der Hohlkern 11 aus dem Hohlkörper 18 herausgelöst.

Bedingt durch die Kunststoffeigenschaften kann der Umformprozeß nur in einem sehr engen Prozeßtemperaturbereich ablaufen. Deshalb ist die Regelung der Temperatur nach einer vorgegebenen Zeitfunktion nahezu während der gesamten Prozeßdauer nützlich.

Der Hohlkern 11 wird unter Aufbringung von längsgerichteten, den Hohlkern 11 verjüngenden Zugkräften an den Hohlkernenden 20 und 21 aus dem Hohlkörper 18 herausgelöst. Der Hohlkern 11 ist für das Verfahren mehrfach verwendbar, da der Hohlkern 11 zum Herauslösen durch die Zugkräfte nur gering verjüngt wird.

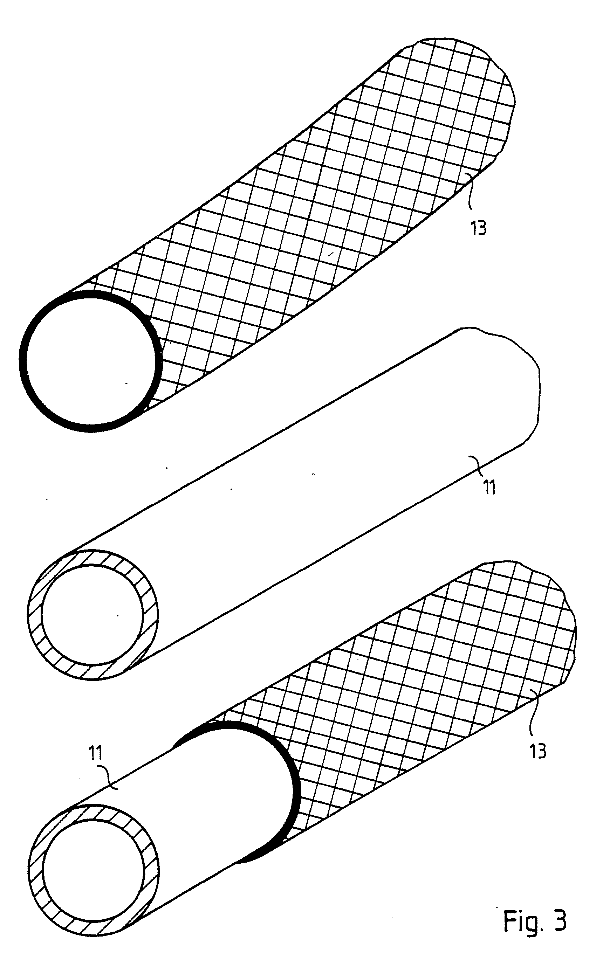

In Figur 3a bis 3c ist ein perspektivischer Ausschnitt einer Verfahrensvariante dargestellt. Über den erfindungsgemäßen Hohlkern 11 wird ein schlauchförmiges Kunststofflaminat 13 gezogen. Das Kunststofflaminat 13 weist in einem Winkel zueinander gewebte Fasern auf. Dadurch kann das Kunststofflaminat 13 unter Vergrößerung des Winkels der jeweiligen Fasern zueinander und unter gleichzeitiger Verkürzung der Gasamtlänge des Kunststofflaminats 13 radial nach außen gedehnt und somit über den Hohlkern 11 gezogen werden. Auf diese Weise bildet sich eine Oberflächenspannung im Kunststofflaminat 13, so daß sich dieses eng an den Hohlkern 11 anlegt und an dessen Oberflächenkontur anpaßt.

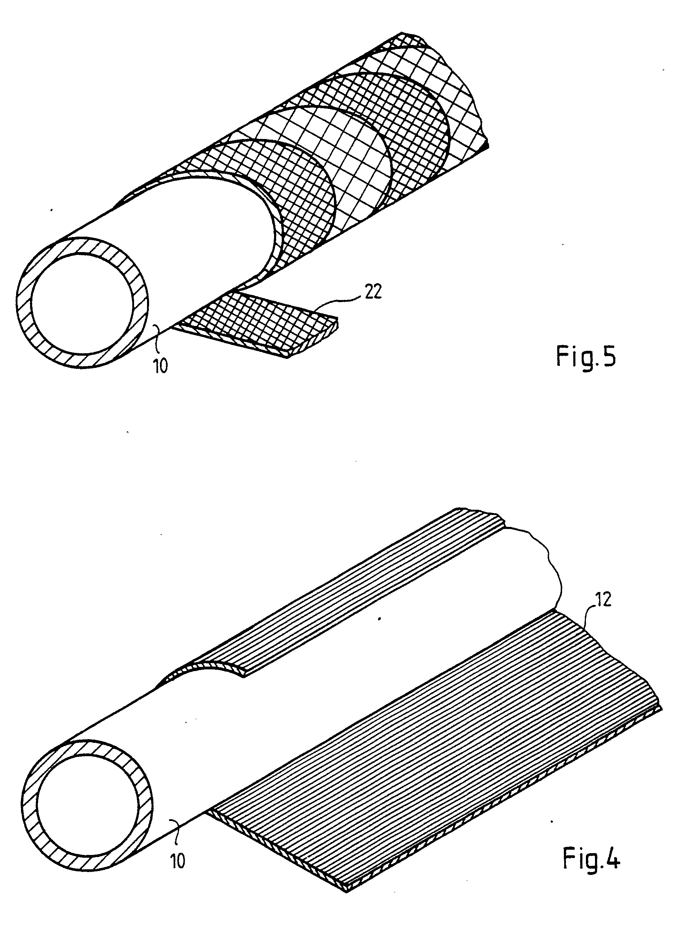

Eine Variante zum Aufbringen des folienförmigen Kunststofflaminats 12 auf den Hohlkern 11 ist in Figur 4 dargestellt. Das langfaserige Kunststofflaminat 12 wird dabei um den Hohlkern 11 gewickelt, so daß die Fasern parallel zur Beanspruchungsrichtung, also parallel zur Symmetrieachse des Hohlkerns 10, aufgebracht werden. Dadurch ist der Hohlkörper 18 besonders für Zug - Druck - Beanspruchung geeignet.

In Figur 5 ist eine weitere Verfahrensvariante dargestellt. Ein bandförmiges Kunststofflaminat 22 wird um den Hohlkern 11 eng anliegend gewickelt. Dadurch erhält der Hohlkörper 18 eine hohe Torsions- und Biegefestigkeit.

Der Kunststoffmantel kann aber auch derart aufgebracht werden, daß schichtweise unterschiedliche Kunststofflaminate 12, 13 und 22 oder Verbundwerkstoffe gegebenenfalls mit Fasern mit der jeweiligen Verfahrensvariante ein- oder mehrschichtig aufgebracht werden. Dadurch kann der Hohlkörper 18 in vorteilhafter Weise beanspruchungsgerecht gefertigt werden bzw. eine beanspruchungsgerechte Werkstoffwahl ist möglich.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Ansprüche**

1. Verfahren zum Herstellen eines Hohlkörpers aus insbesondere faserverstärktem thermoplastischem Kunststofflaminat, bei dem das Kunststofflaminat auf einen Hohlkern aufgebracht wird, bei dem der Hohlkern mit dem diesen umschließenden Kunststofflaminat in eine Hohlform eingelegt wird, bei dem der Hohlkern zum Anpressen des erwärmten Kunststofflaminates an die Innenwand der Hohlform mittels Innendruck zu dem Hohlkörper aufgeweitet wird und bei dem der Hohlkern nach dem Abkühlen aus dem Hohlkörper herausgelöst wird, **dadurch gekennzeichnet,** daß der ein leicht verdampfbares Medium enthaltende und hermetisch verschlossene Hohlkern (11) erwärmt wird, so daß das Aufweiten des Hohlkerns (11) durch Verdampfen des eingeschlossenen Mediums erfolgt.

2. Verfahren nach Anspruch 1, **dadurch gekennzeichnet,** daß vor dem Einlegen des aus metallischem Werkstoff, insbesondere aus Auluminium, bestehenden Hohlkerns (11) mit dem Kunststofflaminat (12, 13, 22) die Hohlform (10) mit Stickstoff gespült wird.

3. Verfahren nach einem der Ansprüche 1 oder 2, **dadurch gekennzeichnet,** daß das Aufbrin gen des Kunststofflaminates (12, 13, 22) auf den Hohlkern (11) durch Wickeln eines Laminatbandes (22) bzw. einer Laminatfolie (12) und/oder durch Überziehen eines Laminatschlauches (13) erfolgt.

4. Verfahren nach einem der Ansprüche 1 bis 3, **dadurch gekennzeichnet,** daß das Erwärmen des Kunststofflaminates (12, 13, 22) in einer evakuierten Umgebung erfolgt.

5. Verfahren nach einem der Ansprüche 1 bis 4, **dadurch gekennzeichnet,** daß Herauslösen des Hohlkernes (11) mittels längsgerichteter, den Hohlkern (11) verjüngenden Zugkräften erfolgt.

6. Verfahren nach einem der vorangehenden Ansprüche, **dadurch gekennzeichnet,** daß der Hohlkern (11) mit einem Verbundwerkstoff, gegebenenfalls mit Faseranteil, ein- oder mehrschichtig bzw. als Laminat ummantelt wird.

7. Verfahren nach einem der vorangehenden Ansprüche, **dadurch gekennzeichnet,** daß der Hohlkern (11) sich derart infolge des durch Erwärmung erhöhten Innendrucks und die durch die Erwärmung bedingte geringere Formfestigkeit ausdehnt, daß das anliegende thermoplastische Kunststofflaminat (12, 13, 22) zusammen gepreßt wird, so daß nach dem Erkalten eventuelle Hohlräume im thermoplastischen Kunststofflaminat (12, 13, 22) beseitigt sind.

8. Verfahren nach einem der vorangehenden Ansprüche, **dadurch gekennzeichnet,** daß das Abkühlen der Hohlform (10), des Hohlkerns (11) und insbesondere des thermoplastischen Kunststofflaminats (12, 13, 22) nach einer vorgegebenen zeitabhängigen Funktion geregelt wird.

9. Verfahren nach einem der vorangehenden Ansprüche, **dadurch gekennzeichnet,** daß der Hohlkern (11) unter Aufbringung von längsgerichteten, den Hohlkern (11) verjüngenden Zugkräften an den Hohlkernenden (20, 21) aus dem Hohlprofil (18) herausgelöst wird.

10. Verfahren nach einem der vorangehenden Ansprüche, **dadurch gekennzeichnet,** daß thermoplastische Kunststofflaminate (12, 13, 22) mit im wesentlichen längsgerichteten Fasern verwendet werden.

11. Verfahren nach einem der vorangehenden Ansprüche, **dadurch gekennzeichnet,** daß ein Hohlkern (11) und eine Hohlform (10) mit einander angepaßten Profilen verwendet werden.

12. Vorrichtung zur Durchführung des Verfahrens nach Anspruch 1, **dadurch gekennzeichnet,** daß der Hohlkern (11), bestehend aus einem durch Druck und Temperatur vorbestimmt veränderbaren, wärmeleitenden Werkstoff, eine hermetisch verschließbare Öffnung (19) aufweist und seine Außenfläche ein Innenform- bzw. Innenpreßfläche bildet.

Fig.1

Fig. 2

EP 0 408 161 A2

Fig. 3

Fig.5

Fig.4